# EUROPÄISCHE PATENTSCHRIFT

(11) **EP 3 314 538 B1**
(45) Veröffentlichungstag und Bekanntmachung des Hinweises auf die Patenterteilung: **03.03.2021**
(21) Anmeldenummer: 16731803.9
(22) Anmeldetag: 22.06.2016
(51) Int. Cl.: G06K 19/077, B32B 27/00, B32B 3/02, B32B 3/08, B32B 7/04, B32B 7/12, B32B 27/06, B32B 27/08, B32B 7/02

(54) **KARTENFÖRMIGER DATENTRÄGER MIT FARBIGER KANTE**
CARD-SHAPED DATA CARRIER HAVING A COLOURED EDGE
SUPPORT DE DONNÉES EN FORME DE CARTE PRÉSENTANT DES BORDS COLORÉS

(30) Priorität: 24.06.2015 DE 102015008126
(43) Veröffentlichungstag der Anmeldung: 02.05.2018
(73) Patentinhaber: Giesecke+Devrient Mobile Security GmbH, 81677 München (DE)
(72) Erfinder: RIEDL, Josef, 85395 Attenkirchen (DE); ENDRES, Günter, 81547 München (DE); KOHL, Klaus, 83714 Miesbach (DE); SAUER, Thorsten, 85435 Erding (DE)
(86) Internationale Anmeldenummer: PCT/EP2016/001064
(87) Internationale Veröffentlichungsnummer: WO 2016/206805

(56) Entgegenhaltungen:
- CN-U- 203 490 718
- DE-A1-102010 031 923
- DE-A1-102012 216 126
- FR-A1- 2 983 325

## Beschreibung

Die Erfindung beschreibt einen kartenförmigen Datenträger mit farbiger Kante.

Aus dem Stand der Technik sind kartenförmige Datenträger mit einer farbigen Folie im Inneren und einem entsprechenden farbigen Rand bekannt, wobei der Rand über den gesamten Umfang farbig ist.

Zur Herstellung von kartenförmigen Datenträgern, wie z.B. Chipkarten, Kreditkarten, Bankkarten, Gesundheitskarten, Identitätskarten, Versicherungskarten, etc., mit einem farbigen Rand sind unterschiedliche Möglichkeiten bekannt.

In einem ersten Herstellungsverfahren wird im Inneren des kartenförmigen Datenträgers eine eingefärbte Folie angeordnet, die auf beiden Seiten flächig weiß bedruckt wird. Der Nachteil an diesem Verfahren ist, dass es sich um einen aufwändigen Druckprozess handelt, welcher einen hohen Verbrauch an Farbe erfordert, um die eingefärbte Folie auf beiden Seiten mit weißer Farbe abzudecken. Daraus resultieren Verbundprobleme im Bereich des flächigen Drucks mit weiteren Folien, welche nur über entsprechende, zusätzliche Ablackierungen und/oder eine Verwendung von kleberbeschichteten Folien ausgeglichen werden können.

Um eine farbige Kante zu erhalten, ist aus US 2014/0224880 A1 eine Bedruckung der Kante bekannt. Dazu werden kartenförmige Datenträger gestapelt und im Stapel werden die Kanten der Datenträger bedruckt. Dies ist ebenfalls ein sehr aufwändiger Prozess, welcher zudem nicht standardisiert ist. Ferner besteht die Gefahr, dass beim Bedrucken der Kanten der gestapelten, kartenförmigen Datenträger nicht nur eine Einfärbung der Kanten erfolgt, sondern auch Druckfarbe zwischen die gestapelten, kartenförmigen Datenträger läuft und folglich unerwünschterweise auch die Oberflächen der kartenförmigen Datenträger mit Druckfarbe beaufschlagt werden.

DE 10 2012 216126 A1 beschreibt ein Herstellungsverfahren für einen Polymerfolienverbund, wobei mindestens zwei Polymerfolien mittels eines Laminierverfahrens verbunden werden.

DE 10 2010 031923 A1 beschreibt eine Kunststoffkarte aus Polycarbonatschichten, in die ein Sicherheitsfaden einlaminiert wird, wobei der Faden eine Trägerfolie aus Polycarbonat und eine holographische Information vermittelnde Beschichtung aufweist.

CN 203 490 718 U beschreibt ein Verfahren zur Herstellung eines tragbaren Datenträgers.

FR 2 983 325 A1 beschreibt ein Verfahren zum Entfernen einer Schicht, die in einem Datenträger enthalten ist.

Es ist deshalb Aufgabe der Erfindung eine Lösung für das oben genannte Problem zur Verfügung zu stellen.

Die Aufgabe der Erfindung wird durch den unabhängigen Anspruch gelöst. Vorteilhafte Ausführungen sind in den abhängigen Ansprüchen beschrieben.

Zur Lösung der Aufgabe offenbart die Erfindung einen kartenförmigen Datenträger, welcher einen Aufbau aus übereinanderliegenden Folienschichten aufweist, wobei im Inneren des Aufbaus mindestens eine erste Folie angeordnet ist, wobei auf der Oberseite der ersten Folie mindestens eine zweite Folie angeordnet ist und auf der Unterseite der ersten Folie mindestens eine dritte Folie angeordnet ist, wobei auf der Seite der zweiten Folie, welche der ersten Folie gegenüberliegend angeordnet ist, eine erste Overlayfolie als erste Außenseite des Datenträgers angeordnet ist, wobei auf der Seite der dritten Folie, welche der ersten Folie gegenüberliegend angeordnet ist, eine zweite Overlayfolie als zweite Außenseite des Datenträgers angeordnet ist, wobei eine umlaufende Kante des Datenträgers, welche zwischen erster und zweiter Außenseite des Datenträgers angeordnet ist und entlang einem äußeren Rand der ersten und zweiten Außenseite verläuft, mindestens eine geometrische Form aufweist.

Der Vorteil der Erfindung ist, dass durch die geometrische Form des Rands des kartenförmigen Datenträgers ein sichtbarer Anteil der ersten, zweiten und dritten Folie bei Betrachtung mindestens einer der beiden Außenseiten des kartenförmigen Datenträgers erhöht wird, ohne dass der Datenträger so bewegt werden muss, damit die Kante direkt betrachtet werden kann. Ferner entsteht bei Betrachtung mindestens einer der beiden Außenseiten des kartenförmigen Datenträgers ein sichtbarer Rand, welcher einen sichtbaren Eindruck einer Außenseite mit Rand erzeugt und somit einen optischen Eindruck mindestens einer der beiden Außenseiten mit Rand des kartenförmigen Datenträgers bei einem Betrachter verstärkt. Die Folien werden mittels eines üblichen Laminierverfahrens unter Druck und Wärme dauerhaft miteinander verbunden. Die Dicke der ersten, zweiten und dritten Folie kann entsprechend dem gewünschten zu erzielenden optischen Effekt angepasst werden, z.B. kann die erste Folie dünner oder dicker als die zweite und dritte Folie sein. Die zweite und dritte Folie kann z.B. eine Dicke von 100 µm haben.

Eine Eigenschaft der Erfindung ist, dass die erste, zweite und dritte Folie farbig sind. Der Vorteil ist, dass durch eine farbige Folie ein farbiger Rand des kartenförmigen Datenträgers ohne technische Probleme erzeugt wird. Für den erfindungsgemäßen farbigen Rand sind vorteilhafterweise keine teuren Druckverfahren mit einem hohen Farbauftrag nötig, da zur Erzeugung des farbigen Rands eine farbige Folie verwendet wird. Darüberhinausgehend entstehen durch die Erfindung auch keine Verbundprobleme im Bereich des flächigen Drucks, da die Materialien der verwendeten Folien entsprechend gewählt werden, so dass Verbundprobleme zwischen den Materialien minimiert werden. Auch ein Verlaufen der Druckfarbe auf die Außenseite, wie es im Stand der Technik beim Bedrucken von Kanten bei gestapelten kartenförmigen Datenträgern im Stand der Technik der Fall ist, tritt hier nicht auf, da erfindungsgemäß kein Druckverfahren verwendet wird, um einen farbigen Rand zu erzeugen.

Eine weitere vorteilhafte Ausführungsform der Erfindung ist, dass die zweite und dritte Folie weiß sind. Durch die weiße Farbe der zweiten und dritten Folie wird der Eindruck der Farbe der ersten Folie bei einem Betrachter verstärkt.

Eine weitere vorteilhafte Ausführungsform der Erfindung ist, dass die erste und/oder zweite Overlayfolie lichtdurchlässig und/oder lichtundurchlässig sind. Durch eine lichtdurchlässige Overlayfolie ist die Farbe der zweiten und dritten Folie auch auf der Außenseite zu erkennen. Ferner können durch eine teilweise lichtdurchlässige, teilweise lichtundurchlässige Overlayfolie z. B. von außen optisch erkennbare Muster, Figuren, Zeichen, Zahlen, Bilder, Designs, Symbole etc. erzeugt werden. Ferner können auf einer lichtundurchlässigen Overlayfolie weitere von außen sichtbare Informationen z.B. aufgedruckt oder aufgeprägt werden.

Eine weitere Eigenschaft der Erfindung ist, dass die geometrische Form der Kante rund oder schräg ist. Durch die runde oder schräge Form der Kante ist es möglich, dass die Farbe der Kante durch einen Benutzer bereits beim Blick auf eine der beiden Außenseiten erkannt wird, ohne dass der Datenträger bewegt werden muss, um die Kante betrachten zu können. Die Form der Kante kann durch ein mechanisches Verfahren, z.B. Fräsen oder Stanzen, oder mittels Laser oder einem anderen geeigneten Verfahren hergestellt werden.

Eine weitere vorteilhafte Ausführungsform der Erfindung ist, dass der Datenträger einen Chip zur Datenverarbeitung und eine kontaktgebundene und/oder kontaktlose Schnittstelle zur Datenübertragung aufweist, wobei der Chip mit der Schnittstelle elektrisch leitend verbunden ist.

Ferner offenbart die Erfindung ein Verfahren zur Herstellung eines Datenträgers gemäß den oben beschriebenen vorteilhaften Ausführungsbeispielen.

Im Folgenden werden vorteilhafte Ausführungsbeispiele der Erfindung beschrieben.

Figur 1 zeigt einen schematischen Aufbau eines kartenförmigen Datenträgers gemäß Stand der Technik im Querschnitt.

Figuren 2, 3, 4 und 5 zeigen jeweils einen Aufbau eines erfindungsgemäßen Datenträgers mit unterschiedlichen geometrischen Kantenformen im Querschnitt.

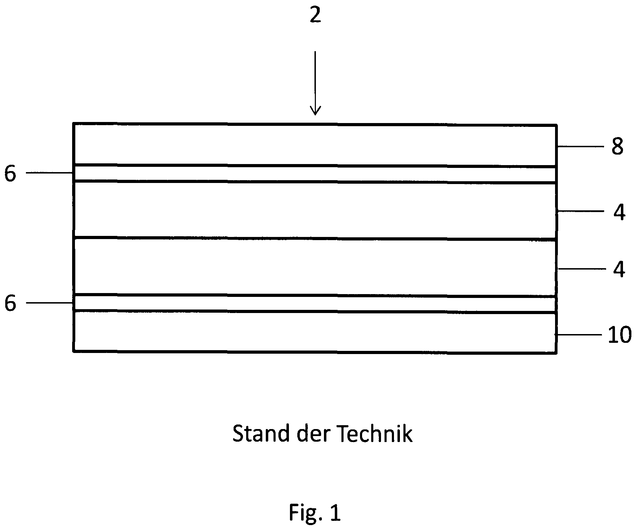

Figur 1 zeigt einen kartenförmigen Datenträger 2 gemäß Stand der Technik. Der Datenträger 2 umfasst im Inneren des Datenträgers 2 z.B. zwei farbige Folien 4. Die farbige Folie 4 ist eine eingefärbte Folie, wie sie käuflich erwerblich ist. Auf den beiden äußeren Seiten des Verbunds, bestehend aus den beiden farbigen Folien 4, ist eine flächig aufgetragene Druckfarbe 6 angeordnet. Als letzte äußere Folienschicht ist auf beiden Seiten eine Overlayfolie 8 und 10 angeordnet. Wie oben beschrieben, ist der flächige Auftrag der Druckfarbe 6 sehr aufwändig und teuer. Ferner müssen Verbundprobleme zwischen der Druckfarbe 6 und der Overlayfolie 10 durch eine zusätzliche Lackierung oder eine Verwendung von kleberbeschichteten Folien gelöst werden, was einen weiteren technischen und finanziellen Aufwand erzeugt.

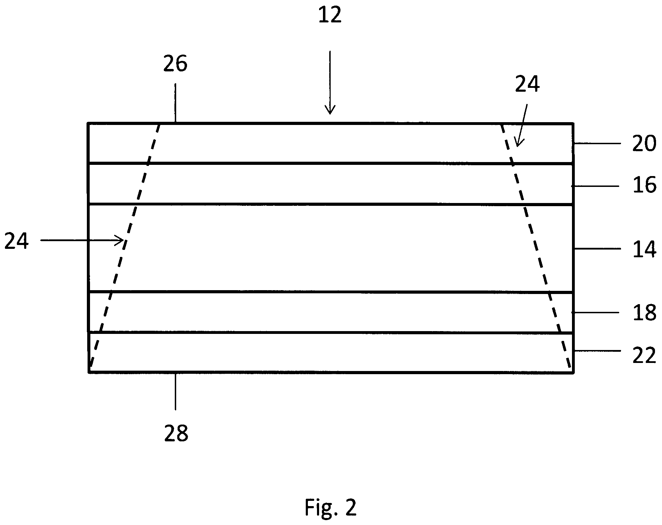

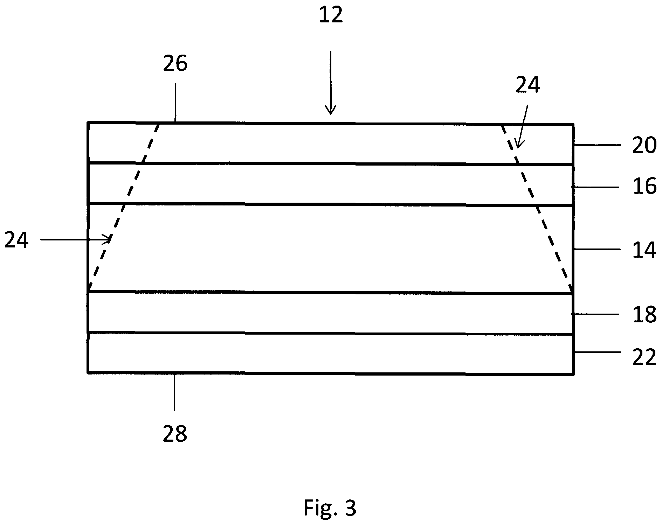

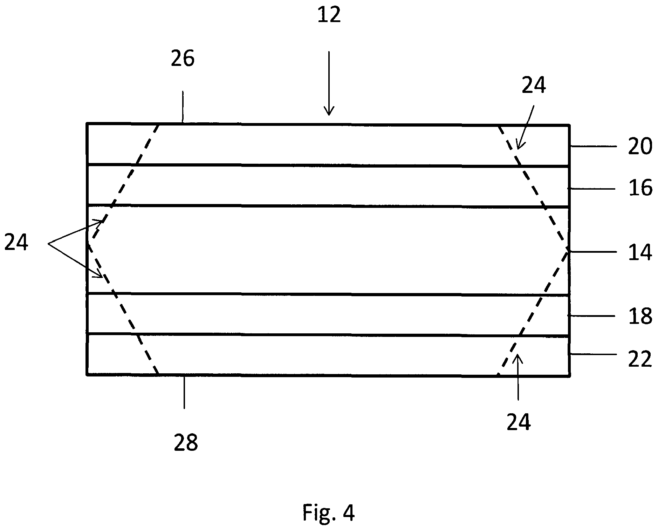

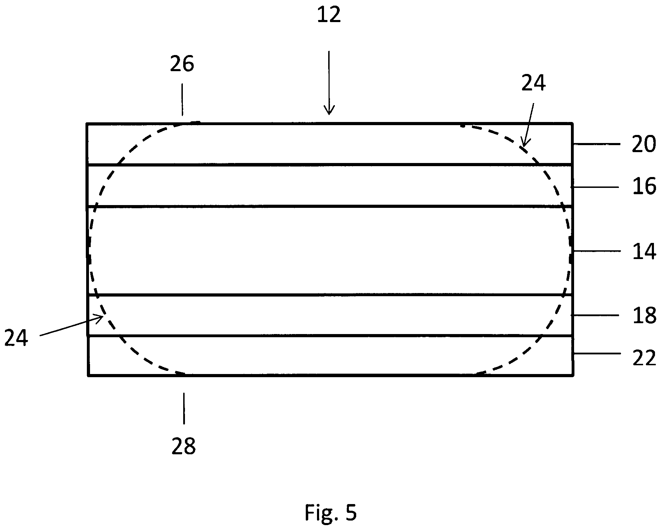

Die Figuren 2, 3, 4 und 5 offenbaren jeweils ein Ausführungsbeispiel eines erfindungsgemäßen kartenförmigen Datenträgers 12 mit unterschiedlicher geometrischer Form einer Kante 24. Der erfindungsgemäße Datenträger 12 weist in seinem Inneren eine erste, farbige Folie 14 auf. Auf einer Oberseite der ersten Folie 14 ist eine zweite, farbige Folie 16 angeordnet. Auf einer Unterseite der ersten Folie 14 ist eine dritte, farbige Folie 18 angeordnet. Als äußerste Folie ist auf beiden Seiten des Datenträgers 12 eine Overlayfolie 20 und 22 angeordnet. Die geometrische Form der Kante 24 des Datenträgers 12 erzeugt den erfindungsgemäßen optischen Eindruck beim Betrachten des Datenträgers 12, dass wenn ein Betrachter eine Außenseite 26, 28 des Datenträgers 12 betrachtet, dann sieht der Betrachter gleichzeitig die Ränder der farbigen Folien 14,16 und 18 und erhält damit einen optischen Eindruck einer farbigen Kante 24 des Datenträgers 12. Für die geometrische Form der Kante 24 gibt es unterschiedliche Möglichkeiten. Beispielhaft sind in den Figuren 2 und 3 eine einseitig abgeschrägte Form, in Figur 4 eine beidseitig abgeschrägte Form und in Figur 5 eine abgerundete Form angegeben. Figur 2 zeigt, wie sich die Kante 24 über die gesamte Höhe und alle Folien des Datenträgers 12 erstreckt und Figur 3 zeigt, wie sich die Kante 24 nur über einen Teil der Folien bzw. der Höhe des Datenträgers 12 erstreckt. Es sind alle anderen geeigneten geometrischen Formen für die Kante 24 ebenfalls möglich. Ferner ist es möglich, dass die Kante 24 in ihrem Verlauf um die erste und zweite Außenseite 26 und 28 die geometrische Form behält oder verändert, dass z.B. eine runde in eine abgeschrägte Form übergeht.

### Bezugszeichenliste

- 2: kartenförmiger Datenträger
- 4: farbige Folie
- 6: flächig aufgetragene Druckfarbe
- 8: Overlayfolie
- 10: Overlayfolie
- 12: erfindungsgemäßer kartenförmiger Datenträger
- 14: erste, farbige Folie
- 16: zweite, farbige Folie
- 18: dritte, farbige Folie
- 20: erste Overlayfolie
- 22: zweite Overlayfolie
- 24: geometrische Form der Kante
- 26: erste Außenseite
- 28: zweite Außenseite

## Patentansprüche

1. Kartenförmiger Datenträger (12), welcher einen Aufbau aus übereinanderliegenden Folienschichten aufweist, wobei im Inneren des Aufbaus mindestens eine erste Folie (14) angeordnet ist,
wobei auf der Oberseite der ersten Folie (14) mindestens eine zweite Folie (16) angeordnet ist und auf der Unterseite der ersten Folie (14) mindestens eine dritte Folie (18) angeordnet ist,
wobei auf der Seite der zweiten Folie (16), welche der ersten Folie (14) gegenüberliegend angeordnet ist, eine erste Overlayfolie (20) als erste Außenseite des Datenträgers (12) angeordnet ist,
wobei auf der Seite der dritten Folie (18), welche der ersten Folie (14) gegenüberliegend angeordnet ist, eine zweite Overlayfolie (22) als zweite Außenseite des Datenträgers (12) angeordnet ist,
wobei eine umlaufende Kante (24) des Datenträgers (12), welche zwischen erster und zweiter Außenseite (26, 28) des Datenträgers (12) angeordnet ist und entlang einem äußeren Rand der ersten und zweiten Außenseite (26, 28) verläuft, mindestens eine geometrische Form aufweist, wobei die erste, zweite und dritte Folie (14, 16, 18) farbig sind,
**dadurch gekennzeichnet, dass** die geometrische Form der Kante (24) rund oder schräg ist.

2. Datenträger (12) nach Anspruch 1, **dadurch gekennzeichnet, dass** die zweite und dritte Folie (16,18) weiß sind.

3. Datenträger (12) nach einem der Ansprüche 1 bis 2, **dadurch gekennzeichnet, dass** die erste und/oder zweite Overlayfolie (20, 22) lichtdurchlässig und/oder lichtundurchlässig sind.

4. Datenträger (12) nach einem der Ansprüche 1 bis 3, **dadurch gekennzeichnet, dass** der Datenträger (12) einen Chip zur Datenverarbeitung und eine kontaktgebundene und/oder kontaktlose Schnittstelle zur Datenübertragung aufweist, wobei der Chip mit der Schnittstelle elektrisch leitend verbunden ist.

## Claims

1. A card-shaped data carrier (12) which has a structure of superimposed foil layers, wherein at least a first foil (14) is arranged in the interior of the structure,
wherein at least a second foil (16) is arranged on the upper side of the first foil (14) and at least a third foil (18) is arranged on the lower side of the first foil (14),
wherein a first overlay foil (20) is arranged as the first outer side of the data carrier (12) on the side of the second foil (16) which is arranged opposite the first foil (14),
wherein a second overlay foil (22) is arranged as the second outer side of the data carrier (12) on the side of the third foil (18) which is arranged opposite the first foil (14),
wherein a circumferential edge (24) of the data carrier (12), which is arranged between first and second outer side (26, 28) of the data carrier (12) and extends along an outer edge of the first and second outer side (26, 28), has at least one geometric shape, wherein the first, second and third foils (14, 16, 18) are colored, **characterized in that** the geometric shape of the edge (24) is round or oblique.

2. The data carrier (12) according to claim 1, **characterized in that** the second and third foil (16, 18) are white.

3. The data carrier (12) according to any of claims 1 to 2, **characterized in that** the first and/or second overlay foil (20, 22) are light-transmissive and/or light-non-transmissive.

4. The data carrier (12) according to any of claims 1 to 3, **characterized in that** the data carrier (12) has a chip for data processing and a contact-type and/or contactless interface for data transmission, wherein the chip is electrically conductively connected to the interface.

## Revendications

1. Support de données en forme de carte (12) ayant une disposition en couches de film superposées, cependant que, à l'intérieur de la disposition, au moins un premier film (14) est agencé,
cependant que, sur la face de dessus du premier film (14), au moins un deuxième film (16) est agencé, et que, sur la face de dessous du premier film (14), au moins un troisième film (18) est agencé,
cependant que, sur la face du deuxième film (16), celui qui est agencé face au premier film (14), un premier film de superposition (20) est agencé comme premier côté extérieur du support de données (12),
cependant que, sur la face du troisième film (18), celui qui est agencé face au premier film (14), un deuxième film de superposition (22) est agencé comme deuxième côté extérieur du support de données (12),
cependant qu'un bord (24) contournant le support de données (12), agencé entre le premier et le deuxième côté extérieur (26, 28) du support de données (12) et s'étendant sur un bord extérieur du premier et du deuxième côté extérieur (26, 28), a au moins une forme géométrique, cependant que le premier, deuxième et troisième film (14, 16, 18) sont colorés,
**caractérisé en ce que** la forme géométrique du bord (24) est ronde ou biseautée.

2. Support de données (12) selon la revendication 1, **caractérisé en ce que** le deuxième et le troisième film (16, 18) sont blancs.

3. Support de données (12) selon une des revendications de 1 à 2, **caractérisé en ce que** le premier et/ou le deuxième film de superposition (20, 22) sont translucides ou opaques.

4. Support de données (12) selon une des revendications de 1 à 3, **caractérisé en ce que** le support de données (12) comporte une puce pour le traitement de données et une interface avec contact et/ou sans contact pour la transmission de données, cependant que la puce est reliée de manière électriquement conductrice à l'interface.
